# EUROPÄISCHE PATENTSCHRIFT

(11) **EP 2 794 374 B1**
(45) Veröffentlichungstag und Bekanntmachung des Hinweises auf die Patenterteilung: **02.10.2019**
(21) Anmeldenummer: 12778321.5
(22) Anmeldetag: 23.10.2012
(51) Int. Cl.: B60T 13/74, B60T 7/04, B60T 8/32, G01B 7/14, G01D 5/26

(54) **DIFFERENZWEGSENSOR FÜR EIN BREMSSYSTEM EINES FAHRZEUGS UND VERFAHREN ZUM ERMITTELN EINES DIFFERENZWEGS**
DIFFERENTIAL TRAVEL SENSOR FOR A BRAKE SYSTEM OF A VEHICLE, AND METHOD FOR DETERMINING A DIFFERENTIAL TRAVEL
CAPTEUR DE DÉPLACEMENT DIFFÉRENTIEL POUR UN SYSTÈME DE FREINAGE DE VÉHICULE ET PROCÉDÉ DE DÉTERMINATION D'UN DÉPLACEMENT DIFFÉRENTIEL

(30) Priorität: 19.12.2011 DE 102011088950
(43) Veröffentlichungstag der Anmeldung: 29.10.2014
(73) Patentinhaber: Robert Bosch GmbH, 70442 Stuttgart (DE)
(72) Erfinder: BINDER, Christian, 74172 Neckarsulm (DE)
(86) Internationale Anmeldenummer: PCT/EP2012/070917
(87) Internationale Veröffentlichungsnummer: WO 2013/091937

(56) Entgegenhaltungen:
- EP-A2- 0 096 152
- DE-A1- 10 010 042
- DE-A1-102009 047 263
- US-A- 5 115 186
- US-A1- 2004 155 647
- US-A1- 2009 115 242
- US-A1- 2011 074 209

## Beschreibung

Die Erfindung betrifft eine Bremskraftverstärkervorrichtung mit einem Differenzwegsensor für ein Bremssystem eines Fahrzeugs.

Des Weiteren betrifft die Erfindung ein Verfahren zum Ermitteln eines zwischen einer Fahrerbremskraftübertragungskomponente und einer Aktorkraftübertragungskomponente eines Bremssystems vorliegenden Differenzwegs.

### Stand der Technik

In der DE 10 2009 47 263 A1 ist ein Bremskraftverstärker beschrieben. Der Bremskraftverstärker weist einen als Positionssensor bezeichneten Differenzwegsensor auf. Der Differenzwegsensor ist so an einem Verstärkerkörper zur Übertragung einer Aktorkraft auf mindestens einem verstellbaren Kolben des Hauptbremszylinders angeordnet, dass der Differenzwegsensor zusammen mit dem Verstärkerkörper verstellbar ist. Der Differenzwegsensor soll dazu ausgelegt sein, eine Relativbewegung, das heißt eine Verschiebung einer Kolbenstange zur Übertragung einer Fahrerbremskraft auf den mindestens einen verstellbaren Kolben des Hauptbremszylinders gegenüber dem Verstärkerkörper, zu messen.

Dokument US 2004/155647 A1 offenbart ein Differenzwegsensor für ein Bremssystem eines Fahrzeugs.

Dokument US 2011/074209 A1 offenbart ein Verfahren zum Ermitteln eines zwischen einer Fahrerbremskraftübertragungskomponente und einer Aktorkraftübertragungskomponente eines Bremssystems vorliegenden Differenzwegs.

### Offenbarung der Erfindung

Die Erfindung schafft eine Bremskraftverstärkervorrichtung mit den Merkmalen des Anspruchs 1, ein Bremssystem mit den Merkmalen des Anspruchs 9 und ein Verfahren zum Ermitteln eines zwischen einer Fahrerbremskraftübertragungskomponente und einer Aktorkraftübertragungskomponente eines Bremssystems vorliegenden Differenzwegs mit den Merkmalen des Anspruchs 10.

Unter dem fest bezüglich des ersten Körpers definierbaren/definierten Raumachsensystem soll ein räumliches System verstanden werden, welches gegenüber einem ortsfesten System, in Bezug zu welchem die Aktorkraftübertragungskomponente und die Fahrerbremskraftübertragungskomponente verstellbar sind, zusammen mit dem ersten Körper verstellbar ist. Demgegenüber nimmt der erste Körper trotz einer Verstellbewegung des ersten Körpers in Bezug zu dem ortsfesten System eine konstante Lage/ Stellung in dem fest bezüglich des ersten Körpers definierbaren/definierten Raumachsensystem ein. Man kann das fest bezüglich des ersten Körpers definierbare/definierte Raumachsensystem somit als ein räumliches System bezeichnen, welches zusammen mit dem ersten Körper mitwandert.

Unter der fest vorgegebenen Intensitätsverteilung des ersten elektrischen und/oder magnetischen Feldes kann verstanden werden, dass unabhängig von einer Lage/Stellung des ersten Körpers in Bezug zu dem ortsfesten System das erste elektrische und/oder magnetische Feld in dem fest bezüglich des ersten Körpers definierbaren/definierten Raumachsensystems stets die gleiche Intensitätsverteilung aufweist. Es wird darauf hingewiesen, dass unter der Intensitätsverteilung nicht notwendiger Weise absolute Intensitätswerte des ersten elektrischen und/oder magnetischen Feldes verstanden werden müssen. Stattdessen kann unter der Intensitätsverteilung auch eine Differenzwertverteilung des ersten elektrischen und/oder magnetischen Felds verstanden werden.

### Vorteil der Erfindung

Die vorliegende Erfindung realisiert eine Bremskraftverstärkervorrichtung mit einem Differenzwegsensor mit einer Sensoreinrichtung, deren Lage bezüglich eines Fahrzeugbordnetzes und/oder einer zentralen Fahrzeugsteuervorrichtung trotz einer Verstellbewegung jeweils der Fahrerbremskraftübertragungskomponente und der Aktorkraftübertragungskomponente konstant haltbar ist. Man kann dies auch so umschreiben, dass die Sensoreinrichtung des mittels der vorliegenden Erfindung realisierbaren Differenzwegsensors ortsfest an dem Fahrzeug anordbar ist. Das Ausführen einer Verstellbewegung der Sensoreinrichtung gegenüber einer fest an dem Fahrzeug angeordneten/ortsfesten Stromversorgungs- und Auswertekomponente der Sensoreinrichtung, welches nach dem Stand der Technik in der Regel notwendig ist, entfällt somit bei der vorliegenden Erfindung. Somit kann die Stromversorgung der Sensoreinrichtung leicht ausgebildet werden. Außerdem kann die Sensoreinrichtung auf einfache Weise mit mindestens einer extern dazu ausgebildeten Elektronik zusammenwirken, ohne dass komplizierte Leitungen, welche eine Verstellbewegung der Sensoreinrichtung gegenüber dieser Elektronik erlauben, dazu ausgebildet werden müssen.

Es wird insbesondere darauf hingewiesen, dass bei der vorliegenden Erfindung das Anbringen der Sensoreinrichtung an der Fahrerbremskraftübertragungskomponente oder an der Aktorkraftübertragungskomponente nicht notwendig ist. Somit muss die Sensoreinrichtung auch nicht für den während eines Bremsbetriebs von diesen Übertragungskomponenten ausgeführten Weg/Hub (von bis zu 42 mm) ausgelegt werden. Eine Kontaktierung der Sensoreinrichtung über ein bewegtes Kabel, beziehungsweise einen Schleifkontakt, ist deshalb auch nicht notwendig. Dies spart Kosten bei der Ausbildung des Differenzwegsensors.

Da die vorliegende Erfindung ein verlässliches Bestimmen des Differenzwegs zu vertretbaren Kosten und mit einem vergleichsweise geringen Arbeitsaufwand erlaubt, ist es nicht notwendig, den Differenzweg mittels eines ersten Absolutwegs der Fahrerbremskraftübertragungskomponente und eines zweiten Absolutwegs der Aktorkraftübertragungskomponente zu bestimmen. Dies erlaubt eine verbesserte Genauigkeit des bestimmten Differenzwegs. Somit können die Vorteile eines Differenzwegsensors gegenüber einem Absolutwegsensor mit der vorliegenden Erfindung kostengünstig genutzt werden. Gleichzeitig ist eine vorteilhafte Sicherheit eines unter Berücksichtigung des bestimmten Differenzwegs, bzw. der festgelegten Ausgabeinformation, gesteuerten/ getriebenen Bremssystems erhöht.

Da der Differenzweg mittels der vorliegenden Erfindung sehr genau bestimmbar ist, treten die herkömmlicher Weise häufig vorkommenden Fehlbetriebe des Bremssystems bei der Verwendung der vorliegenden Erfindung nicht auf. Beispielsweise ist nicht zu befürchten, dass aufgrund eines nicht erkannten Differenzwegs ungleich Null eine Bremskraftverstärkung von dem Bremssystem unterlassen wird. Stattdessen kann das unter Verwendung der vorliegenden Erfindung betriebene Bremssystem verlässlich auf einen Differenzweg gleich Null geregelt werden, wobei eine der Fahrerbremskraft entsprechende Aktorkraft zur kraftmäßigen Unterstützung des Fahrers verlässlich auf den mindestens einen verstellbaren Kolben des Hauptbremszylinders ausübbar ist. Ebenso entfällt das Risiko, dass ein fälschlicher Weise als zu groß gedeuteter Differenzweg zu einem übermäßigen Einsatz des Aktors führt, welcher seinerseits zu einer zusätzlichen Steigerung des Differenzwegs beitragen kann. Mittels der vorliegenden Erfindung sind diese Probleme verlässlich behebbar.

In einer vorteilhaften Ausführungsform umfasst die Felderzeugungskomponente einen an dem ersten Körper fest anordbaren Permanentmagneten. Somit ist das bezüglich des ersten Körpers fest vorgegebene erste elektrische und/oder magnetische Feld als magnetisches Feld auf einfache Weise erzeugbar, ohne dass dazu ein Stromversorgungskabel an den ersten Körper geführt werden muss.

In einer weiteren formhaften Ausführungsform umfasst die Felderzeugungskomponente eine Lichtquelle. Die Lichtquelle kann insbesondere so benachbart zu der Fahrerbremskraftübertragungskomponente oder der Aktorkraftübertragungskomponente anordbar sein, dass die Fahrerbremskraftüberragungskomponente und die Aktorkraftübertragungskomponente in Bezug zu der Lichtquelle verstellbar sind. Somit entfällt die Notwendigkeit, die Lichtquelle an dem ersten Körper mitverstellbar anzuordnen und eine mitbewegbare Stromversorgungsleitung für die Lichtquelle an den ersten Körper zu legen. Stattdessen kann die fest an einem Fahrzeuggerüst/ortsfest anordbare Lichtquelle so auf einen lichtdurchlässigen Bereich/einen Spalt/eine Blendenöffnung des ersten Körpers ausgerichtet werden, dass das gegenüber dem ersten Körper fest vorgegebene erste elektrische und/oder magnetische Feld als elektromagnetisches Feld durch den lichtdurchlässigen Bereich/den Spalt/die Blendenöffnung in Richtung zu dem zweiten Körper gerichtet ist.

In den oberen Absätzen aufgezählte Vorteile sind auch bei einer Bremskraftverstärkervorrichtung für ein Bremssystem eines Fahrzeuges mit einem derartigen Differenzwegsensor gewährleistet.

In einer vorteilhaften Ausführungsform umfasst die Bremskraftverstärkervorrichtung die Fahrerbremskraftübertragungskomponente und die Aktorkraftübertragungskomponente. Dies erlaubt eine Ausbildung mindestens einer Übertragungskomponente für ein vorteilhaftes Wechselwirken mit dem ersten elektrischen und/oder magnetischen Feld.

Beispielsweise kann die mit dem Permanentmagneten der Felderzeugungskomponente als zweiter Körper wechselwirkende Fahrerbremskraftübertragungskomponente oder Aktorkraftübertragungskomponente zumindest teilweise aus einem ferromagnetischen Material gebildet sein. Dies erlaubt ein verlässliches Bestimmen der mindestens einen Intensitätsgröße auch mittels einer kostengünstigen Auswerteinrichtung.

Als Alternative oder als Ergänzung dazu kann mindestens ein lichtdurchlässiger Bereich jeweils in der Fahrerbremskraftübertragungskomponente und in der Aktorkraftübertragungskomponente ausgebildet sein. Somit kann anhand einer Intensität eines gegebenenfalls durch die sich überlagernden lichtdurchlässigen Bereiche durchtretenden Lichtstrahls verlässlich eine Information bezüglich der Stellung der Fahrerbremskraftübertragungskomponente und der Aktorkraftübertragungskomponente gewonnen werden.

In einer vorteilhaften Weiterbildung sind mindestens ein erster lichtdurchlässiger Bereich und ein zweiter lichtdurchlässiger Bereich jeweils in der Fahrerbremskraftübertragungskomponente und in der Aktorkraftübertragungskomponente ausgebildet, wobei der erste lichtdurchlässige Bereich der Fahrerbremskraftübertragungskomponente in Bezug zu dem zweiten lichtdurchlässigen Bereich der Fahrerbremskraftübertragungskomponente in einer Lage ausgebildet ist, welche gegenüber einer anderen Lage des ersten lichtdurchlässigen Bereichs der Aktorkraftübertragungskomponente in Bezug zu dem zweiten lichtdurchlässigen Bereich der Aktorkraftübertragungskomponente um eine parallel zu einer Verstellachse, entlang welcher die Fahrerbremskraftübertragungskomponente in Bezug zu der Aktorkraftübertragungskomponente verstellbar ist, ausgerichteten Strecke versetzt ist. Man kann dies auch als gegenläufige Anordnung der mindestens zwei lichtdurchlässigen Bereiche an der Fahrerbremskraftübertragungskomponente und an der Aktorkraftübertragungskomponente bezeichnen. Auf diese Weise ist eine zeitliche oder eine räumliche Schwankung einer Leistung der Lichtquelle verlässlich heraus mittelbar, ohne dass dies zu einem Fehler bei dem Festlegen des Differenzwegs führt.

Die Fahrerbremskraftübertragungskomponente kann zumindest eine Untereinheit eines Eingangskolbens sein, über welchen eine Fahrerbremskraft von einem Bremsbetätigungselement auf mindestens einen verstellbaren Kolbens eines Hauptbremszylinders übertragbar ist. Entsprechend kann auch die Aktorkraftübertragungskomponente zumindest einer Untereinheit eines Verstärkerkolbens sein, über welchen eine Aktorkraft von einem Aktor auf den mindestens einen verstellbaren Kolben des Hauptbremszylinders übertragbar ist. Für die beiden Übertragungskomponenten können somit kostengünstige und an einem Bremskraftverstärker in der Regel bereits vorhandene Komponenten verwendet werden.

Die oben genannten Vorteile sind auch bei einem Bremssystem für ein Fahrzeug mit einem entsprechenden Differenzwegsensor und/oder einer korrespondierenden Bremskraftverstärkervorrichtung realisiert.

Des Weiteren sind die oben genannten Vorteile auch bei einem Ausführen des entsprechenden Verfahrens zum Ermitteln eines zwischen einer Fahrerbremskraftübertragungskomponente und einer Aktorkraftübertragungskomponente eines Bremssystems vorliegenden Differenzwegs realisiert.

### Kurze Beschreibung der Zeichnungen

Weitere Merkmale und Vorteile der vorliegenden Erfindung werden nachfolgend anhand der Figuren erläutert. Es zeigen:
Fig. 1a bis 1d schematische Darstellungen eines Bremskraftverstärkers und Koordinatensysteme zum Darstellen einer Ausführungsform des Verfahrens zum Ermitteln eines Differenzwegs;
Fig. 2a bis 2d schematische Darstellungen einer Bremskraftverstärkervorrichtung und Koordinatensysteme zum Erläutern einer ersten Ausführungsform des Differenzwegsensors;
Fig. 3a bis 3d schematische Darstellungen einer Bremskraftverstärkervorrichtung und Koordinatensysteme zum Darstellen einer zweiten Ausführungsform des Differenzwegsensors;
Fig. 4 an schematische Darstellung einer ersten Ausführungsform der Bremskraftverstärkervorrichtung; und
Fig. 5a und 5b eine schematische Seitenansicht und ein Koordinatensystem zum Darstellen einer zweiten Ausführungsform der Bremskraftverstärkervorrichtung.

### Ausführungsformen der Erfindung

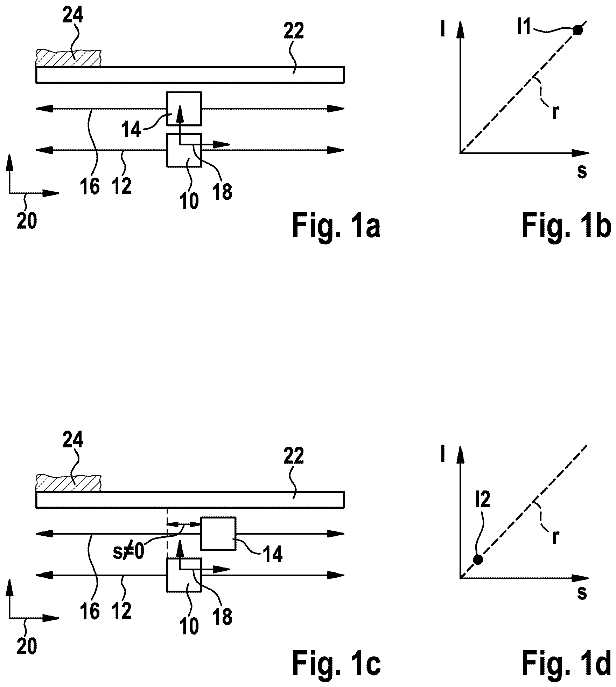

Fig. 1a bis 1d zeigen schematische Darstellungen eines Bremskraftverstärkers und Koordinatensysteme zum Darstellen einer Ausführungsform des Verfahrens zum Ermitteln eines Differenzwegs.

Das in Fig. 1a bis 1d schematisch wiedergegebene Verfahren ist vorteilhaft geeignet zum Ermitteln eines zwischen einer Fahrerbremskraftübertragungskomponente und einer Aktorkraftübertragungskomponente eines Bremssystems vorliegenden Differenzwegs s. Unter der Fahrerbremskraftübertragungskomponente kann eine mittels einer Fahrerbremskraft verstellbare Kraftübertragungskomponente verstanden werden, über welche eine Fahrerbremskraft von einem (nicht dargestellten) Bremsbetätigungselement, wie beispielsweise einem Bremspedal, auf mindestens einen (nicht skizzierten) verstellbaren Kolben eines Hauptbremszylinders übertragbar ist. Die Fahrerbremskraftkomponente kann beispielsweise ein Eingangskolben/eine Eingangsstange eines Bremskraftverstärkers sein. Die Ausbildbarkeit der Fahrerbremskraftübertragungskomponente ist jedoch nicht auf einen Eingangskolben/eine Eingangsstange eines Bremskraftverstärkers limitiert. Beispielsweise kann die Fahrerbremskraftübertragungskomponente auch lediglich eine Komponente sein, welche bei der Betätigung des Bremsbetätigungselement verstellt wird, ohne die Fahrerbremskraft auf den mindestens einen verstellbaren Kolben des Hauptbremszylinders zu übertragen.

Unter der Aktorkraftübertragungskomponente kann mindestens eine Kraftübertragungskomponente verstanden werden, welche mittels einer Aktorkraft eines (nicht skizzierten) Aktors bewegbar ist. Durch das Verstellen der Aktorkraftübertragungskomponente kann die Aktorkraft auf den mindestens einen verstellbaren Kolben des Hauptbremszylinders übertragbar sein. Die Aktorkraftübertragungskomponente kann insbesondere ein Verstärkerkolben/eine Verstärkerstange/ein Verstärkerkörper eines Bremskraftverstärkers sein. Unter dem Aktor kann beispielsweise ein Motor oder eine Hydraulikeinrichtung eines Bremskraftverstärkers verstanden werden. Es wird jedoch darauf hingewiesen, dass die Ausbildungsbeispiele der Aktorkraftübertragungskomponente und des Aktors lediglich beispielhaft zu verstehen sind.

Die Fig. 1a und 1c zeigen jeweils einen ersten Körper 10, welcher entlang einer ersten Bewegungsbahn 12 verstellbar ist. Der erste Körper 10 ist die Fahrerbremskraftübertragungskomponente oder die Aktorkraftübertragungskomponente. Außerdem ist in den Fig. 1a und 1c auch jeweils ein zweiter Körper 14 dargestellt, welcher entlang einer zweiten Bewegungsbahn 16 verstellbar ist. Der zweite Körper 14 ist ungleich dem ersten Körper 10 und ist die Fahrerbremskraftübertragungskomponente oder die Aktorkraftübertragungskomponente.

Bei dem in den Fig. 1a bis 1d schematisch wiedergegebenen Verfahren wird ein erstes elektrisches und/oder magnetisches Feld mit einer vorgegebenen Intensitätsverteilung in einem fest bezüglich des ersten Körpers 10 definierbaren/definierten Raumachsensystem 18 erzeugt. Darunter kann verstanden werden, dass das erste elektrische und/oder magnetische Feld in dem fest bezüglich des ersten Körpers 10 definierbaren/definierten Raumachsensystem 18 eine vorgegebene Intensitätsverteilung aufweist. Das erste elektrische und/oder magnetische Feld kann beispielsweise ein elektrisches Feld, ein magnetisches Feld und/oder ein elektromagnetisches Feld umfassen. Unter dem fest bezüglich des ersten Körpers 10 definierbaren/definierten Raumachsensystem 18 kann beispielsweise ein räumliches System verstanden werden, dessen Stellung/Lage in Bezug zu einem raumfesten System 20 mittels eines Verstellens des ersten Körpers 10 (z.B. entlang einer Bahn und/oder um eine Drehachse) veränderbar ist. Demgegenüber bewirkt eine Verstellbewegung des ersten Körpers 10 (z.B. entlang einer Bahn und/oder um eine Drehachse) keine Änderung einer Stellung/Position des ersten Körpers 10 in dem fest bezüglich des ersten Körpers 10 definierbaren/definierten Raumachsensystem 18. Somit führt die Verstellbewegung des ersten Körpers 10 (z.B. entlang einer Bahn und/oder um eine Drehachse) nicht zu einer Änderung der Intensitätsverteilung des ersten elektrischen und/oder magnetischen Felds in dem fest bezüglich des ersten Körpers 10 definierbaren/ definierten Raumachsensystem 18.

Das erzeugte erste elektrische und/oder magnetische Feld kann beispielsweise ein Magnetfeld mit einer in dem fest bezüglich des ersten Körpers 10 definierbaren/definierten Raumachsensystem 18 vorgegebenen magnetischen Feldstärkeverteilung sein. Zum Erzeugen eines derartigen Magnetfelds als zumindest Teilkomponente des ersten elektrischen und/oder magnetischen Felds kann beispielsweise ein (nicht skizzierter) Permanentmagnet an dem ersten Körper 10 fest angeordnet werden. (Darunter kann verstanden werden, dass der Permanentmagnet so an dem ersten Körper 10 angeordnet ist/wird, dass eine Verstellbewegung des ersten Körpers 10 (z.B. entlang einer Bahn und/oder um eine Drehachse) keine Änderung einer Stellung/Position des Permanentmagneten in Bezug zu dem ersten Körper 10 bewirkt.)

Das Magnetfeld mit der in dem Raumachsensystem 18 (fest) vorgegebenen magnetischen Feldstärkeverteilung ist somit ohne eine elektrische Verbindung zwischen einer (ortsfesten) Stromquelle und dem ersten Körper 10 erzeugbar. Insbesondere entfällt damit die Notwendigkeit, eine selbst während einer Verstellbewegung des ersten Körpers 10 entlang der ersten Bewegungsbahn 12 funktionierende Stromversorgungskomponente, wie beispielsweise ein bewegliches Kabel und/oder einen Schleifkontakt, zwischen der (ortsfesten) Stromquelle und dem ersten Körper 10 auszubilden.

Der oben genannte Vorteil ist auch gewährleistet, wenn zum Erzeugen eines elektro-magnetischen Felds als zumindest Teilkomponente des ersten elektrischen und/oder magnetischen Felds Licht/elektro-magnetische Strahlung einer getrennt von der Fahrerbremskraftübertragungskomponente und der Aktorkraftübertragungskomponente angeordneten Lichtquelle auf mindestens einen benachbarten lichtdurchlässigen Bereich der Fahrerbremskraftübertragungskomponente oder der Aktorkraftübertragungskomponente gerichtet wird. Man kann dies auch so umschreiben, dass ein Licht einer ortsfest angeordneten Lichtquelle so auf den ersten Körper 10 gerichtet wird, dass zumindest ein Teil des Lichts durch einen in dem ersten Körper 10 ausgebildeten lichtdurchlässigen Bereich zumindest teilweise in Richtung des zweiten Körpers 14 fällt.

In einem weiteren Verfahrensschritt des vorteilhaften Verfahrens zum Ermitteln des Differenzwegs s wird mindestens eine Intensitätsgröße I eines zweiten elektrischen und/oder magnetischen Felds, welches aufgrund einer Wechselwirkung des ersten elektrischen und/oder magnetischen Felds mit dem zweiten Körper 14 erzeugt wird, bestimmt. Die Wechselwirkung zwischen dem ersten elektrischen und/oder magnetischen Feld und dem zweiten Körper 14 ist abhängig von einer Stellung/Lage des zweiten Körpers 14 gegenüber der Intensitätsverteilung des ersten elektrischen und/oder magnetischen Felds, bzw. gegenüber dem Raumachsensystem 18. Somit ist die Wechselwirkung abhängig von dem Differenzweg s. Die mindestens eine Intensitätsgröße I ist somit eine Relation r von dem Differenzweg s, wie in den Koordinatensystemen der Fig. 1b und 1d schematisch dargestellt ist. Die in dem Koordinatensystem der Fig. 1b angezeigte erste Intensitätsgröße I1 entspricht einem Differenzweg s gleich Null, welcher in der schematischen Darstellung der Fig. 1a vorliegt. Demgegenüber zeigt Fig. 1c eine Stellung der Körper 10 und 14 zueinander bei einem Differenzweg s ungleich Null, welcher zu einer zweiten Intensitätsgröße I2 führt (Fig. 1d).

Die mindestens eine Intensitätsgröße I kann beispielsweise eine Lichtintensität und/oder eine magnetische Feldstärke umfassen. Zum Ermitteln der mindestens einen Intensitätsgröße I kann eine (ortsfeste) Sensoreinrichtung 22 verwendet werden, deren Lage/ Stellung (bezüglich des ortsfesten Systems 20) unbeeinflusst von einer Verstellbewegung des ersten Körpers 10 und/oder des zweiten Körpers 14 (z.B. entlang einer Bahn und/ oder um eine Drehachse) ist. Beispielsweise kann die Sensoreinrichtung 22 mittels mindestens einer Befestigungskomponente 24 unverstellbar/fest an einem Fahrzeug montiert sein. Entsprechend einfach ist auch eine elektrische Kontaktierung zwischen der Sensoreinrichtung 22 und einer Stromquelle und/oder zwischen der Sensoreinrichtung 22 und einer Auswerteelektronik ausbildbar. Eine vorteilhafte Funktionsweise der mindestens einen elektrischen Kontaktierung ist somit auch ohne ein bewegliches Kabel und/oder einen Schleifkontakt gewährleistet. Außerdem kann die mit der Sensoreinrichtung 22 zusammenwirkende Auswerteelektronik ortsfest, und damit kostengünstig, ausgelegt werden.

Aufgrund der Relation r zwischen der mindestens einen Intensitätsgröße I und dem Differenzweg s, bzw. des messbaren Effekts der unterschiedlichen Wechselwirkung des zweiten Körpers 14 mit dem ersten elektrischen und/oder magnetischen Feld bei einem Variieren des Differenzwegs s, kann in einem weiteren Verfahrensschritt eine Ausgabeinformation bezüglich des Differenzwegs s unter Berücksichtigung der mindestens einen Intensitätsgröße I des zweiten elektrischen und/oder magnetischen Felds verlässlich festgelegt werden. Insbesondere kann mittels des hier beschriebenen Verfahrens der Differenzweg s, beziehungsweise eine entsprechende Ausgabegröße, mit einer größeren Genauigkeit als bei einer Festlegung des Differenzwegs s als Differenz eines mittels eines ersten Absolutwegsensors gemessenen ersten Absolutwegs des ersten Körpers 10 und eines mittels eines zweiten Absolutwegsensors gemessenen zweiten Absolutwegs des zweiten Körpers 14 bestimmt werden. Das mittels des hier beschriebenen Verfahrens realisierbare Messprinzip gewährleistet somit eine größere Robustheit gegenüber Messfehlern.

Das oben beschriebene Verfahren kann beispielsweise mittels der nachfolgend ausgeführten Ausführungsformen eines Differenzwegsensors ausgeführt werden. Es wird jedoch darauf hingewiesen, dass die Ausführbarkeit des Verfahrens nicht auf die Verwendung eines bestimmten Typs eines Differenzwegsensors limitiert ist.

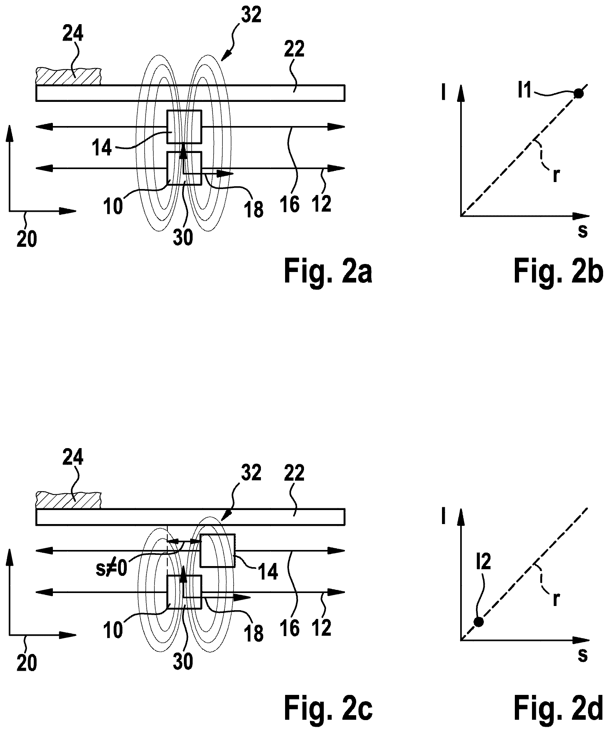

Fig. 2a bis 2d zeigen schematische Darstellungen einer Bremskraftverstärkervorrichtung und Koordinatensysteme zum Erläutern einer ersten Ausführungsform des Differenzwegsensors.

Der in den Fig. 2a bis 2d schematisch wiedergegebene Differenzwegsensor ist beispielsweise in einem Bremssystem eines Fahrzeugs einsetzbar. Insbesondere kann der Differenzwegsensor dazu ausgelegt sein, mit einer Bremskraftverstärkervorrichtung zusammenzuwirken. Es wird jedoch darauf hingewiesen, dass die hier beschriebene Einsetzbarkeit des im Weiteren beschriebenen Differenzwegsensors lediglich beispielhaft zu interpretieren ist.

Der Differenzwegsensor weist eine Felderzeugungskomponente 30 auf, welche an oder benachbart zu einer Fahrerbremskraftübertragungskomponente des Bremssystems oder einer Aktorkraftübertragungskomponente des Bremssystems anordbar/angeordnet ist. Mittels der Felderzeugungskomponente 30 ist ein erstes elektrisches und/oder magnetisches Feld mit einer vorgegebenen Intensitätsverteilung in einem fest bezüglich eines ersten Körpers 10 definierbaren/definierten Raumachsensystem 18 erzeugbar. Wie oben schon beschrieben, ist der erste Körper 10 die Fahrerbremskraftübertragungskomponente oder die Aktorkraftübertragungskomponente. Ausbildungsbeispiele für die Fahrerbremskraftübertragungskomponente und die Aktorkraftübertragungskomponente sind oben schon beschrieben. Auch bezüglich der Beschreibung des fest bezüglich des ersten Körpers 10 definierbaren/definierten Raumachsensystems 18 wird auf die oben gemachten Ausführungen verwiesen.

Ein zweiter Körper, welcher ungleich dem ersten Körper 10 und die Fahrerbremskraftübertragungskomponente oder die Aktorkraftübertragungskomponente ist, wechselwirkt mit dem ersten elektrischen und/oder magnetischen Feld. Diese Wechselwirkung bewirkt ein zweites elektrisches und/oder magnetisches Feld 32.

Die Felderzeugungskomponente 30 umfasst bei der in den Fig. 2a bis 2d wiedergegebenen Ausführungsform einen an dem ersten Körper 10 fest anordbaren Permanentmagneten. Bevorzugter Weise ist in diesem Fall die mit dem Permanentmagneten der Felderzeugungskomponente 30 als zweiter Körper 14 wechselwirkende Fahrerbremskraftübertragungskomponente oder Aktorkraftübertragungskomponente zumindest teilweise aus einem ferromagnetischen Material gebildet. Die magnetische Feldstärkeverteilung des zweiten elektrischen und/oder magnetischen Felds 32 kann somit signifikant von der magnetischen Feldstärkeverteilung des ersten elektrischen und/oder magnetischen Felds abweichen.

Der Differenzwegsensor weist auch eine Sensoreinrichtung 22 auf, welche dazu ausgelegt ist, mindestens eine Intensitätsgröße I des zweiten elektrischen und/oder magnetischen Felds 32, welches aufgrund der Wechselwirkung des ersten elektrischen und/oder magnetischen Felds mit dem zweiten Körper 14 erzeugbar ist, zu bestimmen. Die Sensoreinrichtung 22 ist so an/in einem mit dem Differenzwegsensor ausgestatteten Fahrzeug anordbar/angeordnet, dass die Fahrerbremskraftübertragungskomponente und die Aktorkraftübertragungskomponente in Bezug zu der Sensoreinrichtung 22 verstellbar sind. Man kann dies auch als eine ortsfeste/unbewegliche Anordnung der Sensoreinrichtung 22 umschreiben. Insbesondere kann die Sensoreinrichtung 22 mittels mindestens einer Befestigungskomponente 24 an einem Fahrzeuggerüst montiert sein. Aufgrund der festen Anordbarkeit/Montierbarkeit der Sensoreinrichtung 22 ist eine starre Kontaktierung zwischen der Sensoreinrichtung 22 und einer Stromquelle und/oder zwischen der Sensoreinrichtung 22 und einer Auswerteelektronik ausreichend. Durch das Entfallen einer Notwendigkeit eines Ausstattens einer verwendbaren Kontaktierung mit einem beweglichen Kabel und/oder einem Schleifkontakt können Kosten eingespart werden. Außerdem weist die Sensoreinrichtung 22 aufgrund ihrer starren Kontaktierung eine verbesserte Robustheit auf.

Aufgrund der oben schon beschriebenen Relation r zwischen dem Differenzweg s und der mindestens einen Intensitätsgröße I kann eine (nicht dargestellte) Auswerteeinrichtung des Differenzwegsensors unter Berücksichtigung der mindestens einen Intensitätsgröße I eine Ausgabeinformation bezüglich des zwischen der Bremskraftübertragungskomponente und der Aktorkraftübertragungskomponente vorliegenden Differenzwegs s verlässlich festlegen. Die Auswerteeinrichtung kann beispielsweise eine Untereinrichtung der Sensoreinrichtung 22 sein. Ebenso kann die Auswerteeinrichtung auch eine Untereinheit einer zentralen Fahrzeugelektronik sein. Aufgrund der Ausbildbarkeit der Auswerteeinrichtung als eine Untereinheit der zentralen Fahrzeugelektronik ist der hier beschriebene Differenzwegsensor somit mit einem vergleichsweise geringen Bauraumbedarf ausbildbar. Bezüglich der vorteilhaften Genauigkeit, mit welcher der Differenzweg s mittels des Differenzwegsensors festlegbar ist, wird auf die oben gemachten Ausführungen verwiesen.

Beispielsweise kann unter Berücksichtigung des von dem Differenzwegsensor festgelegten Differenzwegs s ein Aktor einer Bremskraftverstärkervorrichtung so betrieben/ angesteuert werden, dass der Differenzweg s zwischen der Fahrerbremskraftübertragungskomponente und der Aktorkraftübertragungskomponente gleich Null eingeregelt/ eingestellt wird. Der betriebene/angesteuerte Aktor, mittels welchem eine Aktorkraft auf die Aktorkraftübertragungskomponente ausübbar ist, kann beispielsweise ein elektrischer Motor oder eine Hydraulikeinrichtung der Bremskraftverstärkervorrichtung sein. Es wird jedoch darauf hingewiesen, dass die Einsetzbarkeit des Differenzwegsensors nicht auf einen bestimmten Typ einer damit zusammenwirkenden Bremskraftverstärkervorrichtung oder auf eine bestimmte Auslegung eines damit ausgestatteten Bremssystems limitiert ist.

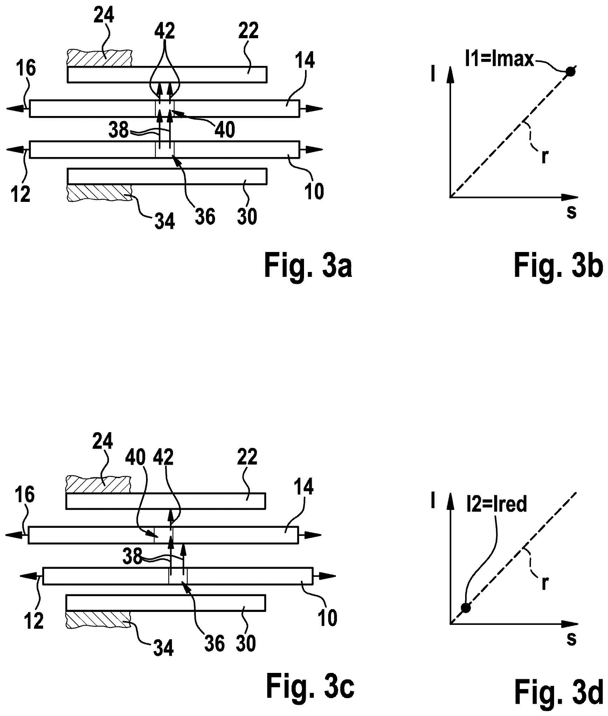

Fig. 3a bis 3d zeigen schematische Darstellungen einer Bremskraftverstärkervorrichtung und Koordinatensysteme zum Darstellen einer zweiten Ausführungsform des Differenzwegsensors.

Der in den Fig. 3a bis 3d schematisch wiedergegebene Differenzwegsensor weist als Felderzeugungskomponente 30 eine Lichtquelle auf. Vorzugsweise ist die Lichtquelle so benachbart zu der Fahrerbremskraftübertragungskomponente oder der Aktorkraftübertragungskomponente anordbar/angeordnet, dass die Fahrerbremskraftübertragungskomponente und die Aktorkraftübertragungskomponente, bzw. der erste Körper 10 und der zweite Körper 14, in Bezug zu der Lichtquelle verstellbar sind. Man kann dies auch als eine ortsfeste Anordnung der als Felderzeugungskomponente 30 umschreibbaren Lichtquelle bezeichnen. Beispielsweise kann die Lichtquelle mittels mindestens einer Befestigungskomponente 34 fest an dem Fahrzeuggerüst montiert sein. Die ortsfeste Anordnung der Lichtquelle erleichtert deren Stromversorgung. Insbesondere sind für die Stromversorgung der Lichtquelle als Felderzeugungskomponente 30 weder ein bewegliches Kabel noch ein Schleifkontakt notwendig.

Bevorzugter Weise sind der erste Körper 10 und der zweite Körper 14 in einem Strahlenfluss zwischen der Lichtquelle und der Sensoreinrichtung 22 angeordnet. Beispielsweise kann die Lichtquelle so ausgerichtet sein, dass zumindest ein Teil der emittierten Strahlung in mindestens einen in dem ersten Körper 10 ausgebildeten ersten lichtdurchlässigen Bereich 36, wie beispielsweise eine Blendenöffnung, fällt. Dies bewirkt einen durch den mindestens einen lichtdurchlässigen Bereich 36 geführten und aus dem mindestens einen lichtdurchlässigen Bereich 36 austretenden Lichtstrahl 38 als erstes elektro-magnetisches Feld. Der erste Lichtstrahl 38 ist vorzugsweise zu dem zweiten Körper 14 ausgerichtet. Auch an dem zweiten Körper 14 kann mindestens ein zweiter lichtdurchlässiger Bereich 40, wie beispielsweise eine Blendenöffnung, ausgebildet sein. Der in dem ersten Körper 10 und in dem zweiten Körper 14 jeweils ausgebildete mindestens eine lichtdurchlässige Bereich 36 und 40 ist vorzugsweise derart, dass zumindest bei einem bestimmten Differenzweg s, beispielsweise bei einem Differenzweg s gleich Null (siehe Fig. 3a), ein zweiter Lichtstrahl 42 mit einer maximalen Intensität Imax als zweites elektro-magnetisches Feld aus dem mindestens einen zweiten lichtdurchlässigen Bereich 40 des zweiten Körpers 14 austritt. Zusätzlich sind die lichtdurchlässigen Bereiche 36 und 38 vorzugsweise so ausgebildet, dass bei mindestens einem weiteren Wert des Differenzwegs, beispielsweise bei einem Differenzweg s ungleich Null (siehe Fig. 3d), ein zweiter Lichtstrahl 42 mit einer gegenüber der maximalen Intensität Imax reduzierten Intensität Ired aus dem mindestens einem zweiten lichtdurchlässigen Bereich 40 des zweiten Körpers 14 austritt. Somit kann über die mittels der Sensoreinrichtung 32 messbare Lichtmenge/Lichtintensität/Lichtleistung als die mindestens eine Intensitätsgröße I des Differenzwegs s verlässlich festgelegt werden.

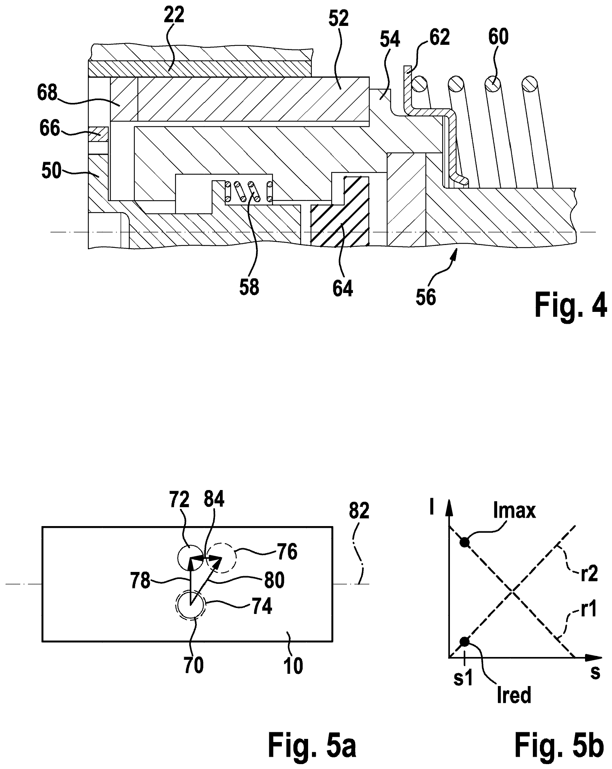

Fig. 4 zeigt an schematische Darstellung einer ersten Ausführungsform der Bremskraftverstärkervorrichtung.

Die in Fig. 4 schematische wiedergegebene Bremskraftverstärkervorrichtung für ein Bremssystem eines Fahrzeugs ist als ein elektromechanischer Bremskraftverstärker mit einem (nicht dargestellten) Motor als Aktor ausgebildet. Es wird jedoch darauf hingewiesen, dass die Ausbildbarkeit einer mit dem Differenzwegsensor ausgestatteten Bremskraftverstärkervorrichtung nicht auf einen bestimmten Typ eines Bremskraftverstärkers beschränkt ist.

Die Bremskraftverstärkervorrichtung umfasst einen Eingangskolben 50/eine Eingangsstange als Fahrerbremskraftübertragungskomponente und einen Verstärkerkolben 52/ eine Verstärkerstange/einen Verstärkerkörper als Aktorkraftübertragungskomponente. Mittels des Eingangskolbens 50 kann eine auf ein (nicht dargestelltes) Bremsbetätigungselement des Bremssystems ausgeübte Fahrerbremskraft auf mindestens einen verstellbaren Kolben 54 eines Hauptbremszylinders 56 ausgeübt werden. (Optionaler Weise kann eine Feder 58 zwischen dem Eingangskolben 50 und dem verstellbaren Kolben 54 angeordnet sein.) Entsprechend kann eine von dem Aktor der Bremskraftverstärkervorrichtung ausgeübte Aktorkraft mittels des Verstärkerkolbens 52 auf den verstellbaren Kolben 54 übertragen werden. Es wird darauf hingewiesen, dass die Einsetzbarkeit der Bremskraftverstärkervorrichtung nicht auf einen bestimmten Typ des Hauptbremszylinders 56 limitiert ist. Bezüglich der Ausbildbarkeit der Komponenten des Hauptbremszylinders 56, wie beispielsweise mindestens einer Rückstellfeder 60, oder eines zwischen dem verstellbaren Kolben 54 und der Rückstellfeder 60 ausgebildeten Mitnahmeelements 62 besteht somit eine große Wahlfreiheit. Auch für die mindestens eine elastische Komponente 64, welche an dem Eingangskolben 50 und dem verstellbaren Kolben 54 angeordnet ist, liegt eine große Designfreiheit vor. Die in Fig. 4 schematisch dargestellten Komponenten 54 bis 64 sind somit lediglich beispielhaft zu interpretieren.

Die mit dem Differenzwegsensor ausgestattete Bremskraftverstärkervorrichtung weist einen Permanentmagneten 66 als Felderzeugungskomponente auf, welcher an dem als ersten Körper eingesetzten Eingangskolben 50 befestigt ist. Außerdem ist ein Teilabschnitt 68 des als zweiten Körper eingesetzten Verstärkerkolbens 52 ferromagnetisch ausgebildet. Die Wechselwirkung des Abschnitts 68 des Verstärkerkolbens 52 mit einem ersten magnetischen Feld des Permanentmagneten 66 kann ein gegenüber dem ersten magnetischen Feld (signifikant/nachweisbar) verändertes zweites magnetisches Feld bewirken. Somit kann eine Sensoreinrichtung 22, welche mittels eines Befestigungselements 24 mit dem Fahrzeuggerüst verbunden ist, mindestens eine von dem Differenzweg beeinflusste Intensitätsgröße des zweiten magnetischen Felds ermitteln. Anschließend kann, wie oben schon schematisch wiedergegeben ist, unter Berücksichtigung der mindestens einen Intensitätsgröße der Differenzweg, bzw. eine Ausgabeinformation bezüglich des Differenzwegs, festgelegt werden.

Fig. 5a und 5b zeigen eine schematische Seitenansicht und ein Koordinatensystem zum Darstellen einer zweiten Ausführungsform der Bremskraftverstärkervorrichtung.

Bei der in den Fig. 5a und 5b schematisch dargestellten Ausführungsform sind mindestens eine Blendenöffnung/ein lichtdurchlässiger Bereich jeweils in der Fahrerbremskraftübertragungskomponente und in der Aktorkraftübertragungskomponente (der Bremskraftverstärkervorrichtung) ausgebildet. Der in Fig. 5a in Seitenansicht dargestellte erste Körper 10, welcher die Fahrerbremskraftüberkomponente oder die Aktorkraftübertragungskomponente ist, weist mindestens einen ersten lichtdurchlässigen Bereich, wie beispielsweise erste Blendenöffnung, und einen zweiten lichtdurchlässigen Bereich 72, insbesondere eine zweite Blendenöffnung, auf. Außerdem sind mindestens ein erster lichtdurchlässiger Bereich 74 und ein zweiter lichtdurchlässiger Bereich 76 in dem dahinter liegenden zweiten Körper 14 (der Fahrerbremskraftübertragungskomponente oder Aktorkraftübertragungskomponente) ausgebildet. Der erste lichtdurchlässige Bereich 70 des ersten Körpers 10 ist in Bezug zu dem zweiten lichtdurchlässigen Bereich 72 des ersten Körpers 10 in einer Lage ausgebildet, welche mittels des Vektors 76 wiedergegeben ist. Der Vektor 76 erstreckt sich von dem Mittelpunkt des ersten lichtdurchlässigen Bereichs 70 des ersten Körpers 10 zu dem Mittelpunkt des zweiten lichtdurchlässigen Bereichs 72 des ersten Körpers 10.

Von dem Mittelpunkt des ersten lichtdurchlässigen Bereichs 74 des zweiten Körpers 14 zu dem Mittelpunkt des zweiten lichtdurchlässigen Bereichs 76 des zweiten Körpers 14 erstreckt sich ein Vektor 80. Der Vektor 80 gibt so eine Lage des ersten lichtdurchlässigen Bereichs 74 des zweiten Körpers 14 in Bezug zu dem zweiten lichtdurchlässigen Bereich 76 des zweiten Körpers 14 wieder. Der Vektor 80 ist gegenüber dem Vektor 78 um eine parallel zu einer Verstellachse 82, entlang welcher der zweite Körper 14 in Bezug zu dem ersten Körper verstellbar ist, ausgerichtete Strecke 84 versetzt.

Man kann die vorteilhafte Ausbildung der lichtdurchlässigen Bereiche 70 bis 76 zueinander auch so umschreiben, dass der erste lichtdurchlässige Bereich der Fahrerbremskraftübertragungskomponente in Bezug zu dem zweiten lichtdurchlässigen Bereich der Fahrerbremskraftübertragungskomponente in einer Lage ausgebildet ist, welche gegenüber einer anderen Lage des ersten lichtdurchlässigen Bereichs der Aktorkraftübertragungskomponente in Bezug zu dem zweiten lichtdurchlässigen Bereich der Aktorkraftübertragungskomponente um eine parallel zu der Verstellachse, entlang welcher die Fahrerbremskraftübertragungskomponente in Bezug zu der Aktorkraftübertragungskomponente verstellbar ist, ausgerichteten Strecke 84 versetzt ist. Des Weiteren kann man die Anordnung der lichtdurchlässigen Bereiche 70 bis 76 auch als gegenläufig bezeichnen.

Die gegenläufige Anordnung der ersten lichtdurchlässigen Bereiche 70 und 74 gegenüber den zweiten lichtdurchlässigen Bereichen 72 und 76 ist mit dem Vorteil verbunden, dass bei einem ersten Differenzweg s1, beispielsweise bei einem ersten Differenzweg s1 gleich Null, eine maximale Lichtintensität Imax durch die übereinanderliegenden ersten lichtdurchlässigen Bereiche 70 und 74 tritt, währen lediglich eine reduzierte Lichtintensität Ired, insbesondere eine minimale Lichtintensität, durch die zweiten lichtdurchlässigen Bereiche 72 und 76 bei diesem ersten Differenzweg s1 treten kann. Die gegenläufige Anordnung der lichtdurchlässigen Bereiche 70 bis 76 führt somit zu unterschiedlichen Relationen r1 und r2 zwischen dem Differenzweg s und dem durch die lichtdurchlässigen Bereiche 70 bis 76 durchtretenden Lichtintensitäten I. Dies kann für eine ausgleichende Auswertung der Intensitätswerte I genutzt werden. Auf diese Weise können (zeitliche und örtliche) Schwankungen in der Leistung der als Felderzeugungskomponente verwendeten Lichtquelle ausgeglichen werden.

Die in den oberen Absätzen beschriebenen Ausführungsformen sind auch auf ein Bremssystem für ein Fahrzeug mit einem Differenzwegsensor oder einer Bremskraftverstärkervorrichtung übertragbar. Auch eine gesonderte Beschreibung eines derartigen Bremssystems wird deshalb hier verzichtet.

## Patentansprüche

1. Bremskraftverstärkervorrichtung für ein Bremssystem eines Fahrzeugs mit einer Fahrerbremskraftübertragungskomponente (50);
einer Aktorkraftübertragungskomponente (52); und
einem Differenzwegsensor mit
- einer Felderzeugungskomponente (30, 66), welche an oder benachbart zu der Fahrerbremskraftübertragungskomponente (50) oder der Aktorkraftübertragungskomponente (52) angeordnet ist und mittels welcher ein erstes elektrisches und/oder magnetisches Feld mit einer vorgegebenen Intensitätsverteilung in einem fest bezüglich eines ersten Körpers (10) definierbaren Raumachsensystem (18) erzeugt ist, wobei der erste Körper (10) die Fahrerbremskraftübertragungskomponente (50) oder die Aktorkraftübertragungskomponente (52) ist;
- einer Sensoreinrichtung (22), welche so an dem Fahrzeug anordbar ist, dass die Fahrerbremskraftübertragungskomponente (50) und die Aktorkraftübertragungskomponente (52) in Bezug zu der Sensoreinrichtung (22) verstellbar sind und mittels welcher mindestens eine Intensitätsgröße (I, I1, I2, Imax, Ired) eines zweiten elektrischen und/oder magnetischen Felds (32, 42), welches aufgrund einer Wechselwirkung des ersten elektrischen und/oder magnetischen Felds mit einem zweiten Körper (14) erzeugt ist, bestimmbar ist, wobei der zweite Körper (14) ungleich dem ersten Körper (10) und die Fahrerbremskraftübertragungskomponente (50) oder die Aktorkraftübertragungskomponente (52) ist; und
- einer Auswerteeinrichtung, mittels welcher unter Berücksichtigung der mindestens einen Intensitätsgröße (I, I1, I2, Imax, Ired) eine Ausgabeinformation bezüglich eines zwischen der Fahrerbremskraftübertragungskomponente (50) und der Aktorkraftübertragungskomponente (52) vorliegenden Differenzwegs (s, s1) festlegbar ist.

2. Bremskraftverstärkervorrichtung nach Anspruch 1, wobei die Felderzeugungskomponente (30, 66) einen an dem ersten Körper (10) fest angeordneten Permanentmagneten (30, 66) umfasst.

3. Bremskraftverstärkervorrichtung nach Anspruch 1 oder 2, wobei die Felderzeugungskomponente (30) eine Lichtquelle (30) umfasst.

4. Bremskraftverstärkervorrichtung nach Anspruch 3, wobei die Lichtquelle (30) so benachbart zu der Fahrerbremskraftübertragungskomponente (50) oder der Aktorkraftübertragungskomponente (52) angeordnet ist, dass die Fahrerbremskraftübertragungskomponente (50) und die Aktorkraftübertragungskomponente (52) in Bezug zu der Lichtquelle (30) verstellbar sind.

5. Bremskraftverstärkervorrichtung nach Anspruch 2, wobei die mit dem Permanentmagneten (30, 66) der Felderzeugungskomponente (30, 66) als zweiten Körper (14) wechselwirkende Fahrerbremskraftübertragungskomponente (50) oder Aktorkraftübertragungskomponente (52) zumindest teilweise aus einem ferromagnetischen Material gebildet ist.

6. Bremskraftverstärkervorrichtung nach einem der vorhergehenden Ansprüche, wobei mindestens ein lichtdurchlässiger Bereich (36, 40, 70, 72, 74, 76) jeweils in der Fahrerbremskraftübertragungskomponente (50) und in der Aktorkraftübertragungskomponente (52) ausgebildet sind.

7. Bremskraftverstärkervorrichtung nach Anspruch 6, wobei mindestens ein erster lichtdurchlässiger Bereich (70, 74) und ein zweiter lichtdurchlässiger Bereich (72, 76) jeweils in der Fahrerbremskraftübertragungskomponente (50) und in der Aktorkraftübertragungskomponente (52) ausgebildet sind, und wobei der erste lichtdurchlässige Bereich der Fahrerbremskraftübertragungskomponente (50) in Bezug zu dem zweiten lichtdurchlässigen Bereich der Fahrerbremskraftübertragungskomponente (52) in einer Lage ausgebildet ist, welche gegenüber einer anderen Lage des ersten lichtdurchlässigen Bereichs der Aktorkraftübertragungskomponente (52) in Bezug zu dem zweiten lichtdurchlässigen Bereich der Aktorkraftübertragungskomponente (52) um eine parallel zu einer Verstellachse (82), entlang welcher die Fahrerbremskraftübertragungskomponente (50) in Bezug zu der Aktorkraftübertragungskomponente (52) verstellbar ist, ausgerichteten Strecke (84) versetzt ist.

8. Bremskraftverstärkervorrichtung nach einem der vorhergehenden Ansprüche, wobei die Fahrerbremskraftübertragungskomponente (50) zumindest eine Untereinheit eines Eingangskolbens (52), über welchen eine Fahrerbremskraft von einem Bremsbetätigungselement auf mindestens einen verstellbaren Kolben (54) eines Hauptbremszylinders (56) übertragbar ist, und/oder die Aktorkraftübertragungskomponente (52) zumindest eine Untereinheit eines Verstärkerkolbens (52), über welchen eine Aktorkraft von einem Aktor auf den mindestens einen verstellbaren Kolben (54) des Hauptbremszylinders (56) übertragbar ist, sind.

9. Bremssystem für ein Fahrzeug mit einer Bremskraftverstärkervorrichtung nach einem der vorhergehenden Ansprüche.

10. Verfahren zum Ermitteln eines zwischen einer Fahrerbremskraftübertragungskomponente (50) und einer Aktorkraftübertragungskomponente (52) eines Bremssystems vorliegenden Differenzwegs (s) mit den Schritten:
Erzeugen eines ersten elektrischen und/oder magnetischen Felds mit einer vorgegebenen Intensitätsverteilung in einem fest bezüglich eines ersten Körpers (10) definierbaren Raumachsensystem (18), wobei der erste Körper (10) die Fahrerbremskraftübertragungskomponente (50) oder die Aktorkraftübertragungskomponente (52) ist;
Bestimmen mindestens einer Intensitätsgröße (I, I1, I2, Imax, Ired) eines zweiten elektrischen und/oder magnetischen Felds (32, 42), welches aufgrund einer Wechselwirkung des ersten elektrischen und/oder magnetischen Felds mit einem zweiten Körper (14) erzeugt wird, wobei der zweite Körper (14) ungleich dem ersten Körper (10) und die Fahrerbremskraftübertragungskomponente (50) oder die Aktorkraftübertragungskomponente (52) ist; und
Festlegen einer Ausgabeinformation bezüglich des Differenzwegs (s) unter Berücksichtigung der mindestens einen Intensitätsgröße (I, Imax, Ired) des zweiten elektrischen und/oder magnetischen Felds (32, 42).

11. Verfahren nach Anspruch 10, wobei zum Erzeugen einer bezüglich des ersten Körpers (10) festen magnetischen Feldverteilung (32) als zumindest Teilkomponente des ersten elektrischen und/oder magnetischen Felds (32) ein Permanentmagnet an dem ersten Körper (10) fest angeordnet wird.

12. Verfahren nach Anspruch 10 oder 11, wobei zum Erzeugen einer bezüglich des ersten Körpers (10) festen elektro-magnetischen Feldverteilung (42) als zumindest Teilkomponente des ersten elektrischen und/oder magnetischen Felds (42) Licht einer getrennt von der Fahrerbremskraftübertragungskomponente (50) und der Aktorkraftübertragungskomponente (52) fest angeordneten Lichtquelle auf mindestens einen benachbarten lichtdurchlässigen Bereich (36, 40, 70, 72, 74, 76) der Fahrerbremskraftübertragungskomponente (50) oder der Aktorkraftübertragungskomponente (52) gerichtet wird.

## Claims

1. Brake force booster device for a brake system of a vehicle, having
a driver braking force transmission component (50);
an actuator force transmission component (52); and
a differential travel sensor, having
- a field-generating component (30, 66) which is arranged at or adjacent to the driver braking force transmission component (50) or the actuator force transmission component (52) and by means of which a first electrical and/or magnetic field with a predefined intensity distribution is generated in a three-dimensional axis system (18) which can be defined fixedly with respect to a first body (10), wherein the first body (10) is the driver braking force transmission component (50) or the actuator force transmission component (52);
- a sensor device (22) which is arrangeable on the vehicle such that the driver braking force transmission component (50) and the actuator force transmission component (52) are adjustable in relation to the sensor device (22) and by means of which at least one intensity value (I, I1, I2, Imax, Ired) of a second electrical and/or magnetic field (32, 42), which is generated owing to an interaction of the first electrical and/or magnetic field with a second body (14), can be determined, wherein the second body (14) is not the same as the first body (10) and is the driver braking force transmission component (50) or the actuator force transmission component (52); and
- an evaluation device by means of which, taking into consideration the at least one intensity value (I, I1, I2, Imax, Ired), an item of output information regarding a differential travel (s, s1) that exists between the driver braking force transmission component (50) and the actuator force transmission component (52) can be defined.

2. Braking force booster device according to Claim 1, wherein the field-generating component (30, 66) comprises a permanent magnet (30, 66) which is arranged fixedly on the first body (10).

3. Braking force booster device according to Claim 1 or 2, wherein the field-generating component (30) comprises a light source (30).

4. Brake force booster device according to Claim 3, wherein the light source (30) is arranged adjacent to the driver braking force transmission component (50) or the actuator force transmission component (52) such that the driver force transmission component (50) and the actuator force transmission component (52) are adjustable in relation to the light source (30).

5. Brake force booster device according to Claim 2, wherein the driver braking force transmission component (50) or actuator force transmission component (52), which interacts with the permanent magnet (30, 66) of the field-generating component (30, 66) as second body (14), is formed at least partially from a ferromagnetic material.

6. Brake force booster device according to any of the preceding claims, wherein at least one translucent region (36, 40, 70, 72, 74, 76) is formed in each case in the driver braking force transmission component (50) and in the actuator force transmission component (52).

7. Brake force booster device according to Claim 6, wherein at least one first translucent region (70, 74) and one second translucent region (72, 76) is formed in each case in the driver braking force transmission component (50) and in the actuator force transmission component (52), and wherein the first translucent region of the driver braking force transmission component (50) is formed, in relation to the second translucent region of the driver braking force transmission component (52), in a position which is offset in relation to another position of the first translucent region of the actuator force transmission component (52) in relation to the second translucent region of the actuator force transmission component (52) by a distance (84) oriented parallel to an adjustment axis (82) along which the driver braking force transmission component (50) is adjustable relative to the actuator force transmission component (52) .

8. Brake force booster device according to any of the preceding claims, wherein the driver braking force transmission component (50) is at least a sub-unit of an input piston (52) by means of which a driver braking force can be transmitted from a brake actuation element to at least one adjustable piston (54) of a master brake cylinder (56), and/or the actuator force transmission component (52) is at least a sub-unit of a booster piston (52) by means of which an actuator force can be transmitted from an actuator to the at least one adjustable piston (54) of the master brake cylinder (56) .

9. Brake system for a vehicle having a brake force booster device according to any of the preceding claims.

10. Method for determining a differential travel (s) that exists between a driver braking force transmission component (50) and an actuator force transmission component (52) of a brake system, having the steps:
generating a first electrical and/or magnetic field with a predefined intensity distribution in a three-dimensional axis system (18) which can be defined fixedly with respect to a first body (10), wherein the first body (10) is the driver braking force transmission component (50) or the actuator force transmission component (52);
determining at least one intensity value (I, I1, I2, Imax, Ired) of a second electrical and/or magnetic field (32, 42), which is generated owing to an interaction of the first electrical and/or magnetic field with a second body (14), wherein the second body (14) is not the same as the first body (10) and is the driver braking force transmission component (50) or the actuator force transmission component (52); and
defining, taking into consideration the at least one intensity value (I, Imax, Ired) of the second electrical and/or magnetic field (32, 42), an item of output information regarding the differential travel (s) .

11. Method according to Claim 10, wherein, for the generation of a magnetic field distribution (32), which is fixed with respect to the first body (10), as at least a sub-component of the first electrical and/or magnetic field (32), a permanent magnet is arranged fixedly on the first body (10).

12. Method according to Claim 10 or 11, wherein, for the generation of an electromagnetic field distribution (42), which is fixed with respect to the first body (10), as at least a sub-component of the first electrical and/or magnetic field (42), light of a light source which is fixedly arranged separately from the driver braking force transmission component (50) and the actuator force transmission component (52) is directed onto at least one adjacent translucent region (36, 40, 70, 72, 74, 76) of the driver braking force transmission component (50) or of the actuator force transmission component (52).

## Revendications

1. Servofrein pour un système de freinage d'un véhicule, comprenant
un composant de transfert de force de freinage du conducteur (50) ;
un composant de transfert de force d'actionneur (52) ; et
un capteur de course différentielle comprenant
- un composant de génération de champ (30, 66) qui est disposé au niveau de ou à côté du composant de transfert de force de freinage du conducteur (50) ou du composant de transfert de force d'actionneur (52) et au moyen duquel un premier champ électrique et/ou magnétique avec une répartition prédéfinie d'intensité est généré dans un système d'axes spatial (18) pouvant être défini fixement par rapport à un premier corps (10), le premier corps (10) étant le composant de transfert de force de freinage du conducteur (50) ou le composant de transfert de force d'actionneur (52) ;
- un dispositif de capteur (22) qui peut être disposé au niveau du véhicule de telle sorte que le composant de transfert de force de freinage du conducteur (50) et le composant de transfert de force d'actionneur (52) puissent être déplacés par rapport au dispositif de capteur (22), et au moyen duquel au moins une grandeur d'intensité (I, I1, I2, Imax, Ired) d'un deuxième champ électrique et/ou magnétique (32, 42) qui est généré sur la base d'une interaction du premier champ électrique et/ou magnétique avec un deuxième corps (14) peut être déterminée, le deuxième corps (14) étant différent du premier corps (10) et étant le composant de transfert de force de freinage du conducteur (50) ou le composant de transfert de force d'actionneur (52) ; et
- un dispositif d'analyse, au moyen duquel, en tenant compte de l'au moins une grandeur d'intensité (I, I1, I2, Imax, Ired), une information en sortie relative à une course différentielle (s, s1) existant entre le composant de transfert de force de freinage du conducteur (50) et le composant de transfert de force d'actionneur (52) peut être déterminée.

2. Servofrein selon la revendication 1, dans lequel le composant de génération de champ (30, 66) comprend un aimant permanent (30, 66) disposé fixement au niveau du premier corps (10).

3. Servofrein selon la revendication 1 ou 2, dans lequel le composant de génération de champ (30) comprend une source de lumière (30).

4. Servofrein selon la revendication 3, dans lequel la source de lumière (30) est disposée à côté du composant de transfert de force de freinage du conducteur (50) ou du composant de transfert de force d'actionneur (52) de telle sorte que le composant de transfert de force de freinage du conducteur (50) et le composant de transfert de force d'actionneur (52) puissent être déplacés par rapport à la source de lumière (30).

5. Servofrein selon la revendication 2, dans lequel le composant de transfert de force de freinage du conducteur (50) ou le composant de transfert de force d'actionneur (52) interagissant avec l'aimant permanent (30, 66) du composant de génération de champ (30, 66) en tant que deuxième corps (14) est formé au moins en partie d'un matériau ferromagnétique.

6. Servofrein selon l'une quelconque des revendications précédentes, dans lequel au moins une région transparente (36, 40, 70, 72, 74, 76) est à chaque fois réalisée dans le composant de transfert de force de freinage du conducteur (50) et dans le composant de transfert de force d'actionneur (52).

7. Servofrein selon la revendication 6, dans lequel au moins une première région transparente (70, 74) et une deuxième région transparente (72, 76) sont à chaque fois réalisées dans le composant de transfert de force de freinage du conducteur (50) et dans le composant de transfert de force d'actionneur (52), et la première région transparente du composant de transfert de force de freinage du conducteur (50) étant réalisée, par rapport à la deuxième région transparente du composant de transfert de force de freinage du conducteur (52), dans une position qui, par rapport à une autre position de la première région transparente du composant de transfert de force d'actionneur (52) par rapport à la deuxième région transparente du composant de transfert de force d'actionneur (52), est décalée d'une distance (84) orientée parallèlement à un axe de réglage (82) le long duquel le composant de transfert de force de freinage du conducteur (50) peut être déplacé par rapport au composant de transfert de force d'actionneur (52).

8. Servofrein selon l'une quelconque des revendications précédentes, dans lequel le composant de transfert de force de freinage du conducteur (50) est au moins une sous-unité d'un piston d'entrée (52) par le biais duquel une force de freinage du conducteur peut être transmise depuis un élément d'actionnement de frein à au moins un piston déplaçable (54) d'un maître-cylindre de frein (56), et/ou le composant de transfert de force d'actionneur (52) est au moins une sous-unité d'un piston amplificateur (52) par le biais duquel une force d'actionneur peut être transmise depuis un actionneur à l'au moins un piston déplaçable (54) du maître-cylindre de frein (56).

9. Système de freinage pour un véhicule comprenant un servofrein selon l'une quelconque des revendications précédentes.

10. Procédé pour déterminer une course différentielle (s) existant entre un composant de transfert de force de freinage du conducteur (50) et un composant de transfert de force d'actionneur (52) d'un système de freinage, comprenant les étapes suivantes :
génération d'un premier champ électrique et/ou magnétique avec une répartition prédéfinie d'intensité dans un système d'axes spatial (18) pouvant être défini fixement par rapport à un premier corps (10), le premier corps (10) étant le composant de transfert de force de freinage du conducteur (50) ou le composant de transfert de force d'actionneur (52) ;
détermination d'au moins une grandeur d'intensité (I, I1, I2, Imax, Ired) d'un deuxième champ électrique et/ou magnétique (32, 42) qui est généré sur la base d'une interaction du premier champ électrique et/ou magnétique avec un deuxième corps (14), le deuxième corps (14) étant différent du premier corps (10) et étant le composant de transfert de force de freinage du conducteur (50) ou le composant de transfert de force d'actionneur (52) ; et
détermination d'une information en sortie relative à la course différentielle (s) en tenant compte de l'au moins une grandeur d'intensité (I, Imax, Ired) du deuxième champ électrique et/ou magnétique (32, 42).

11. Procédé selon la revendication 10, dans lequel, pour générer une répartition de champ magnétique (32) fixe par rapport au premier corps (10), un aimant permanent est disposé fixement au niveau du premier corps (10) sous la forme d'au moins un composant partiel du premier champ électrique et/ou magnétique (32).

12. Procédé selon la revendication 10 ou 11, dans lequel, pour générer une répartition de champ électro-magnétique (42) fixe par rapport au premier corps (10) en tant qu'au moins un composant partiel du premier champ électrique et/ou magnétique (42), de la lumière provenant d'une source de lumière disposée fixement séparément du composant de transfert de force de freinage du conducteur (50) et du composant de transfert de force d'actionneur (52) est orientée sur au moins une région adjacente transparente (36, 40, 70, 72 74, 76) du composant de transfert de force de freinage du conducteur (50) ou du composant de transfert de force d'actionneur (52).
